# EUROPEAN PATENT APPLICATION

(11) **EP 2 541 089 A1**
(43) Date of publication of application: **02.01.2013**
(21) Application number: 11747263.9
(22) Date of filing: 18.02.2011
(51) Int. Cl.: F16D 3/06, B23K 26/00, B23K 26/36, B23K 26/40, B62D 1/20, F16C 3/03

(54) **EXTENDABLE SPLINE SHAFT, VEHICLE STEERING PROVIDED WITH EXTENDABLE SPLINE SHAFT, AND METHOD FOR PRODUCING EXTENDABLE SPLINE SHAFT**

(30) Priority: 23.02.2010 JP 2010037549
(71) Applicant: JTEKT Corporation, Osaka-shi, Osaka 542-8502 (JP); Koyo Machine Industries Co., Ltd., Yao-shi Osaka 581-0091 (JP)
(72) Inventor: TOKIOKA, Ryoichi, Osaka-shi Osaka 542-8502 (JP)
(74) Representative: TBK
(86) International application number: PCT/JP2011/053521
(87) International publication number: WO 2011/105299

(57) **Abstract**

An intermediate shaft (5) as a spline telescopic shaft includes an inner shaft (35) and a tubular outer shaft (36) fitted slidably in an axial direction (X1), outer splines (38) provided on an outer periphery of the inner shaft (35), inner splines (39) provided on an inner periphery of the outer shaft (36), a resin coating (40) provided on the outer splines (38), and a lubricant retaining groove (41) formed on the resin coating (40) by using a laser and extending in a direction (D1) crossing the axial direction (X1).

## Description

### Technical Field

The present invention relates to a spline telescopic shaft telescopic in an axial direction, a vehicle steering apparatus with the spline telescopic shaft, and a method for manufacturing the spline telescopic shaft.

### Background Art

A spline telescopic shaft telescopic in the axial direction is known (for example, refer to Patent Documents 1 to 4) . Each of the spline telescopic shafts according to Patent Documents 1 to 4 includes an inner shaft and a tubular outer shaft spline-fitted to each other slidably relative to each other in the axial direction. In the spline telescopic shafts according to Patent Document 1 to 4, a resin is coated on the outer periphery of the inner shaft. Furthermore, in the spline telescopic shafts according to Patent Documents 1 to 4, grooves or recesses for retaining a lubricant are formed on the inner shaft or the outer shaft.

In detail, in the spline telescopic shaft according to Patent Document 1, by applying shot peening to the inner peripheral surface of the tubular outer shaft, recesses for retaining a lubricant are formed on the inner peripheral surface of the outer shaft.
In the spline telescopic shaft according to Patent Document 2, grooves extending circumferentially are formed on the inner peripheral surface of the outer shaft before splines are formed on the inner periphery of the outer shaft, and traces of the grooves remaining after the splines are formed function as oil reservoirs.

In the spline telescopic shaft according to Patent Document 3, recesses for retaining a lubricant are formed on a resin-coated portion provided on the inner shaft. The recesses are formed by pressing the resin-coated portion by spline teeth of the outer shaft by rotating the inner shaft and the outer shaft around the central axis relative to each other in a state that the inner shaft is fitted to the inner periphery of the outer shaft.
Also, in the spline telescopic shaft according to Patent Document 4, sinkportions (recesses) are formedona resin-coated portion provided on the inner shaft.

### Prior Art Document

### Patent Document

Patent Document 1: Japanese Published Unexamined Patent Application No. 2005-153677
Patent Document 2: Japanese Published Unexamined Patent Application No. 2006-207639
Patent Document 3: Japanese Published Unexamined Patent Application No. 2004-66970
Patent Document 4: Japanese Published Unexamined Patent Application No. S64-55411

### SUMMARY OF THE INVENTION

### Problem to be Solved by the Invention

However, by the method for processing grooves or recesses for retaining a lubricant according to Patent Documents 1 to 4, it is difficult to form grooves or recesses having arbitrary shapes with high dimensional accuracy.
In detail, in Patent Document 1, recesses are formed by shot peening, so that it is difficult to form recesses having arbitrary shapes with high dimensional accuracy.
In Patent Document 2, splines are formed on the inner periphery of the outer shaft after the grooves are formed on the inner peripheral surface of the outer shaft, so that the grooves are deformed. Therefore, it is difficult to form recesses having arbitrary shapes with high dimensional accuracy.

In Patent Document 3, recesses are formed by pressing spline teeth of the outer shaft against the resin-coated portion, so that the shapes of the recesses depend on the shapes of the spline teeth of the outer shaft. Therefore, it is difficult to form recesses having arbitrary shapes with high dimensional accuracy.
In Patent Document 4, sink portions are used, so that it is necessary to process a shaft for forming sink portions in advance, and this is troublesome. Furthermore, sink portions are used, so that it is necessary to form recesses having arbitrary shapes with high dimensional accuracy.

As described above, by the methods for processing grooves, etc., for retaining a lubricant according to Patent Documents 1 to 4, it is difficult to form grooves, etc., having arbitrary shapes with high dimensional accuracy. Therefore, in the spline telescopic shafts according to Patent Documents 1 to 4, a lubricant may not be reliably supplied to sliding portions between the inner shaft and the outer shaft.
The present invention has been made in view of the above-described background, and an obj ect thereof is to provide a spline telescopic shaft on which a lubricant retaining groove having an arbitrary shape with high dimensional accuracy is formed, a vehicle steering apparatus with the spline telescopic shaft, and a method for manufacturing the spline telescopic shaft.

### Means for Solving the Problem

A preferred embodiment of the present invention provides a spline telescopic shaft (5) including an inner shaft (35) and a tubular outer shaft (36) fitted slidably in an axial direction (X1), outer splines (38) provided on the outer periphery of the inner shaft, inner splines (39) provided on the inner periphery of the outer shaft, a resin coating (40) provided on at least one of the outer splines and the inner splines, and a lubricant retaining groove (41) formed on the resin coating by using any of a laser, water jet, and compressed air and extending in a direction (D1) crossing the axial direction.

With this configuration, the lubricant retaining groove is formed on the resin coating, so that when the inner shaft and the outer shaft move relative to each other in the axial direction, the lubricant retained in the lubricant retaining groove can be supplied to sliding portions between the inner shaft and the outer shaft. Accordingly, sliding resistance between the inner shaft and the outer shaft can be reduced, and the inner shaft and the outer shaft can be smoothly moved relative to each other in the axial direction. The lubricant retaining groove extends in a direction crossing the axial direction, so that the lubricant can be reliably supplied to the sliding portions between the inner shaft and the outer shaft. Furthermore, the lubricant retaining groove is formed by using any of a laser, water jet, and compressed air, so that even on a convex-concave portion such as the resin coating of the present invention, the lubricant retaining groove having an arbitrary shape with high dimensional accuracy can be easily formed. Furthermore, the lubricant retaining groove is formed by using any of a laser, water jet, and compressed air, so that existing equipment for manufacturing the spline telescopic shaft can be used (for example, existing equipment for the process up to formation of the lubricant retaining groove can be used without change). Therefore, the lubricant retaining groove can be formed while an increase in cost is suppressed.

Furthermore, the lubricant retaining groove may be formed in at least regions (T1) of the resin coating in which spline tooth flanks (42) are formed (Claim 2). In this case, the lubricant can be reliably supplied to the spline tooth flank as a sliding surface. Accordingly, sliding resistance between the inner shaft and the outer shaft can be reliably reduced, and the inner shaft and the outer shaft can be smoothly moved relative to each other in the axial direction.

The lubricant retaining groove may be spiral. In this case, the lubricant retaining groove may have a fixed pitch or a plurality of pitches. In the case where the spiral lubricant retaining groove is formed, the lubricant retaining groove may be formed by continuously applying a laser, water, or compressed air to the resin coating while an intermediate member for manufacturing at least one of the inner shaft and the outer shaft is rotated around the central axis and moved in the axial direction of the intermediate member for manufacturing. Furthermore, the lubricant retaining groove may be formed by applying a laser, water, or compressed air perpendicularly or substantially perpendicularly to the spline tooth flanks. The lubricant retaining groove may be continuous or intermittent. Specifically, the lubricant retaining groove may include a plurality of annular grooves. In this case, the plurality of annular grooves may be disposed at even intervals in the axial direction, or at uneven intervals in the axial direction.

Another preferred embodiment of the present invention provides a vehicle steering apparatus (1) which includes a steering shaft (3) joined to a steering member (2) and a steering mechanism (A1) joined to the steering shaft via an intermediate shaft (5), and uses the spline telescopic shaft according to Claim 1 or 2 as the steering shaft and/or the intermediate shaft (Claim 3). With this configuration, the steering shaft and/or the intermediate shaft can be smoothly extended and contracted in the axial direction, so that vibration to be transmitted from the steering mechanism side to the steering member can be reliably absorbed by the steering shaft and/or the intermediate shaft, and the vibration can be prevented from being transmitted to the steering member. Furthermore, by using the spline telescopic shaft as a steering shaft of a vehicle steering apparatus having a telescopic adjusting function for adjusting the position of the steering member, the steering member can be smoothly moved. Moreover, by using the spline telescopic shaft as a steering shaft of a vehicle steering apparatus having an energy absorbing function for absorbing energy of so-called secondary collision of a driver with the steering member according to collision of a vehicle, the energy of secondary collision can be more reliably absorbed.

Still another preferred embodiment of the present invention provides a method for manufacturing a spline telescopic shaft that includes an inner shaft and a tubular outer shaft spline-fitted to each other slidably relative to each other in an axial direction, including a step of forming a resin coating on splines (43) of at least one of an intermediate member (44) formanufacturing the inner shaft and an intermediate member (46) for manufacturing the outer shaft, and a step of forming a lubricant retaining groove extending in a direction crossing the axial direction on the resin coating by using any of a laser, water jet, and compressed air (Claim 4). With this configuration, the above-described effects are obtained.

The above-described or other objects, features, and effects of the present invention will be clarified from the description of preferred embodiments to be described below with reference to the accompanying drawings.

### BRIEF DESCRIPTION OF THE DRAWINGS

Fig. 1 is a schematic configuration diagram of a vehicle steering apparatus including an intermediate shaft to which a spline telescopic shaft according to a preferred embodiment of the present invention is applied.
Fig. 2 is a partial sectional view of the intermediate shaft.
Fig. 3 is a sectional view of an essential portion of the intermediate shaft.
Fig. 4 is a front view of spline tooth flanks of outer splines.
Figs. 5A to 5E are an illustrative view for describing an example of a method for manufacturing the intermediate shaft.
Fig. 6 is an illustrative view for describing an example of a processing method for forming a spiral lubricant retaining groove by using a laser.

### Best Mode for Carrying Out the Invention

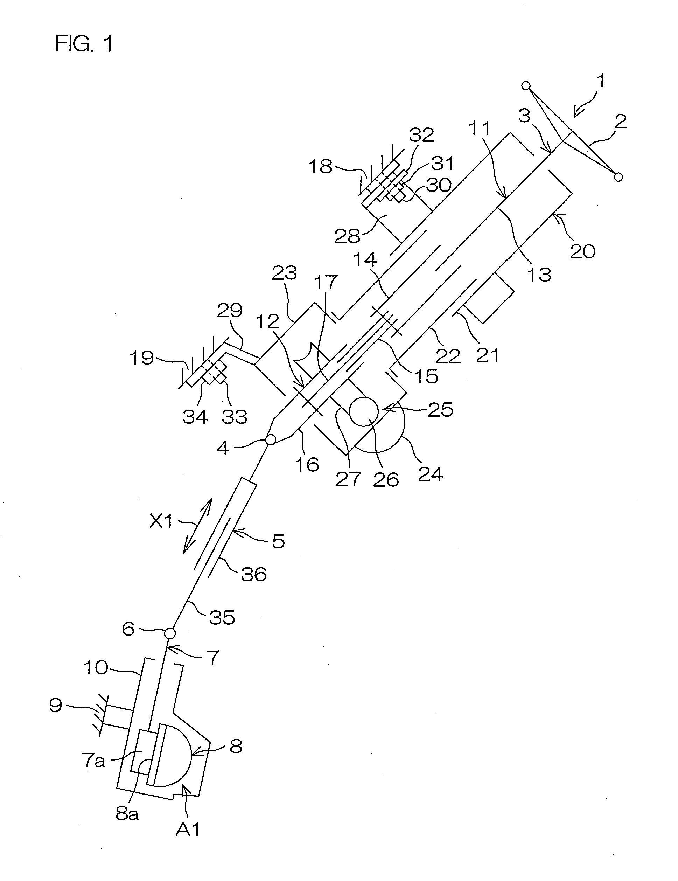

Fig. 1 is a schematic configuration diagram of a vehicle steering apparatus 1 including an intermediate shaft 5 to which a spline telescopic shaft according to a preferred embodiment of the present invention is applied.
Referring to Fig. 1, the vehicle steering apparatus 1 includes a steering shaft 3 joined to a steering member 2 such as a steering wheel, an intermediate shaft 5 as a spline telescopic shaft joined to the steering shaft 3 via a universal joint 4, a pinion shaft 7 joined to the intermediate shaft 5 via a universal joint 6, and a rack shaft 8 as a steered shaft including a rack 8a that engages with a pinion 7a provided in the vicinity of an end of the pinion shaft 7.

A steering mechanism A1 is configured with a rack-and-pinion mechanism including the pinion shaft 7 and the rack shaft 8. The rack shaft 8 is supported movably in an axial direction (orthogonal to the paper sheet) along the right-left direction of the vehicle by a housing 10 fixed to a vehicle body member 9. Each end portion of the rack shaft 8 is joined to a corresponding steered wheel via a corresponding tie rod and a corresponding knuckle arm (not shown).

The steering shaft 3 includes a first steering shaft 11 and a second steering shaft 12 joined coaxially. The first steering shaft 11 includes an upper shaft 13 and a lower shaft 14 fitted together rotatably and slidably relative to each other in the axial direction by using spline coupling. Either one of the upper shaft 13 and the lower shaft 14 constitutes an inner shaft, and the other constitutes an outer shaft.

The second steering shaft 12 includes an input shaft 15 joined to the lower shaft 14 together rotatably, an output shaft 16 joined to the intermediate shaft 5 via the universal joint 4, and a torsion bar 17 that joins the input shaft 15 and the output shaft 16 rotatably relative to each other.
The steering shaft 3 is supported rotatably by a steering column 20 fixed to vehicle body members 18 and 19 via a bearing (not shown).

The steering column 20 includes a tubular upper jacket 21 and a tubular lower jacket 22 fitted to each other slidably relative to each other in the axial direction, and a housing 23 joined to a lower end in the axial direction of the lower jacket 22. A reduction gear mechanism 25 that decelerates a rotation from an electric motor 24 for assisting steering, and transmits the decelerated rotation to the output shaft 16 is housed inside the housing 23.
The reduction gear mechanism 25 includes a drive gear 26 integrally joined to a rotary shaft (not shown) of the electric motor 24, and a driven gear 27 that engages with the drive gear 26 and rotates together with the output shaft 16. The drive gear 26 is , for example, a worm shaft, and the driven gear 27 is , for example, a worm wheel.

The steering column 20 is fixed to the vehicle body members 18 and 19 via the upper bracket 28 on the vehicle rear side and the lower bracket 29 on the vehicle front side. In detail, the upper bracket 28 is fixed to the vehicle body member 18 by using a fixation bolt (stud bolt) 30 projecting downward from the vehicle body member 18, a nut 31 that is screwed into the fixation bolt 30, and a capsule 32 detachably held on the upper bracket 28. The lower bracket 29 is fixed to the vehicle body member 19 by using a fixation bolt (stud bolt) 33 projecting from the vehicle body member 19 and a nut 34 that is screwed into the fixation bolt 33.

The intermediate shaft 5 as a spline telescopic shaft is formed by spline-fitting the inner shaft 35 and the tubular outer shaft 36 along the axial direction X1 of the intermediate shaft 5 in a slidable and torque-transmittable manner. Either one of the inner shaft 35 and the outer shaft 36 configures the upper shaft, and the other configures the lower shaft.
In the present preferred embodiment, the spline telescopic shaft is applied to the intermediate shaft 5, however, another configuration is also possible in which the spline telescopic shaft according to the present invention is applied to the first steering shaft 11 such that the first steering shaft 11 has a telescopic adjusting function and an energy absorbing function. In the present preferred embodiment, the vehicle steering apparatus 1 is an electric power steering system, however, the spline telescopic shaft according to the present invention may be applied to a manual steering type vehicle steering apparatus.

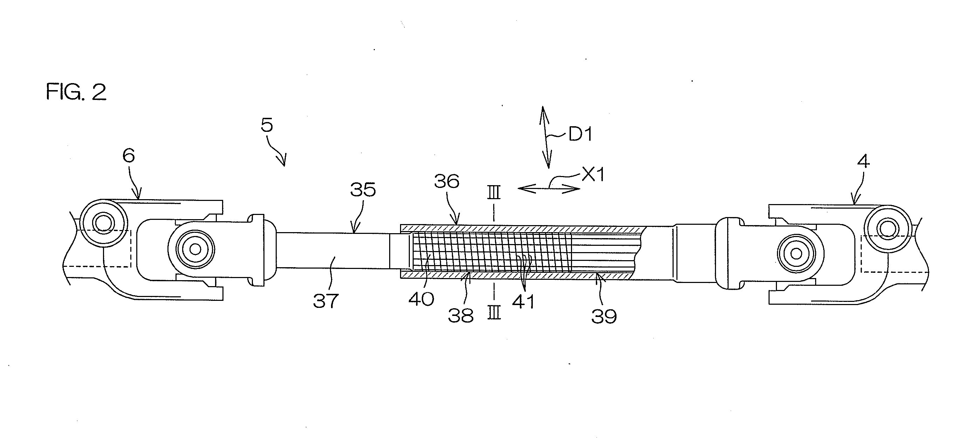

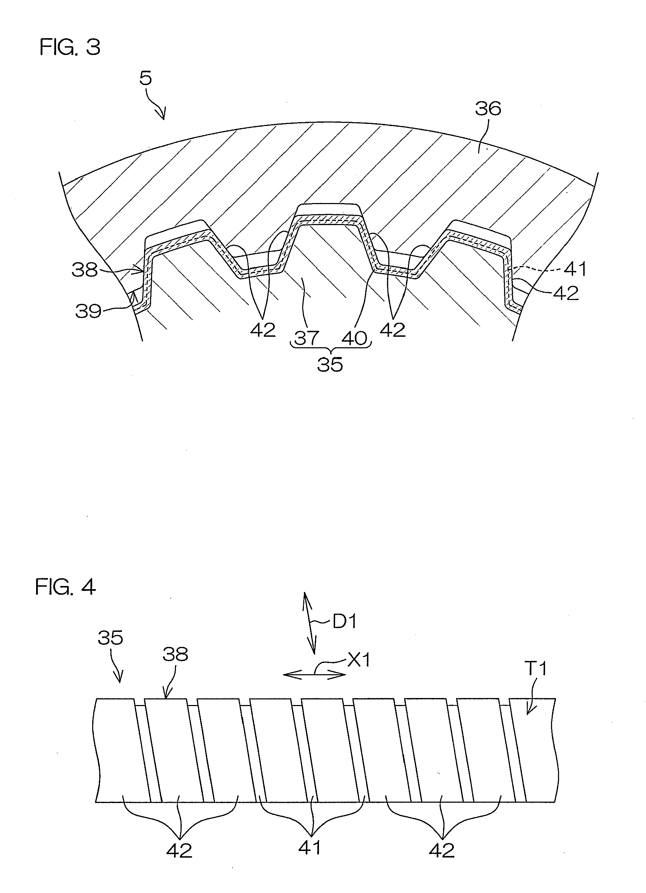

Fig. 2 is a partial sectional view of the intermediate shaft 5. Fig. 3 is a sectional view of an essential portion of the intermediate shaft 5. Fig. 4 is a front view of spline tooth flanks 42 of outer splines 38. Hereinafter, the intermediate shaft 5 as a spline telescopic shaft will be described in detail with reference to Fig. 2 to Fig. 4.
As shown in Fig. 2, the intermediate shaft 5 includes an inner shaft 35 and a tubular outer shaft 36 fitted to each other slidably in the axial direction X1 of the intermediate shaft 5. The inner shaft 35 is formed by coating a synthetic resin on a portion of a cored bar 37. To one end of the inner shaft 35, the universal joint 6 is joined. On the outer periphery of the inner shaft 35, outer splines 38 are provided.

The outer shaft 36 is made of metal. As shown in Fig. 2, the universal joint 4 is joined to one end of the outer shaft 36. On the inner periphery of the outer shaft 36, tubular inner splines 39 are formed. The outer splines 38 and the inner splines 39 are joined so as to transmit power and move relative to each other in the axial direction X1 of the intermediate shaft 5. Between the outer splines 38 and the inner splines 39, a lubricant (for example, grease) is interposed. Accordingly, sliding resistance when the inner shaft 35 and the outer shaft 36 move relative to each other in the axial direction X1 of the intermediate shaft 5 is reduced.

As shown in Fig. 3, the outer splines 38 include a resin coating 40 coated on the outer periphery of the cored bar 37. On the resin coating 40, a lubricant retaining groove 41 recessed from the outer periphery of the resin coating 40 toward the coredbar 37 is formed. As shown in Fig. 2, the lubricant retaining groove 41 extends in a direction D1 (lubricant groove direction) crossing the axial direction X1 of the intermediate shaft 5. As shown in Fig. 4, the lubricant retaining groove 41 is formed in at least regions T1 of the resin coating 40 in which each spline tooth flank 42 of the outer splines 38 are formed. As shown in Fig. 2, in the present preferred embodiment, the lubricant retaining groove 41 is formed so as to spirally surround the outer periphery of the outer splines 38 at a fixed pitch.

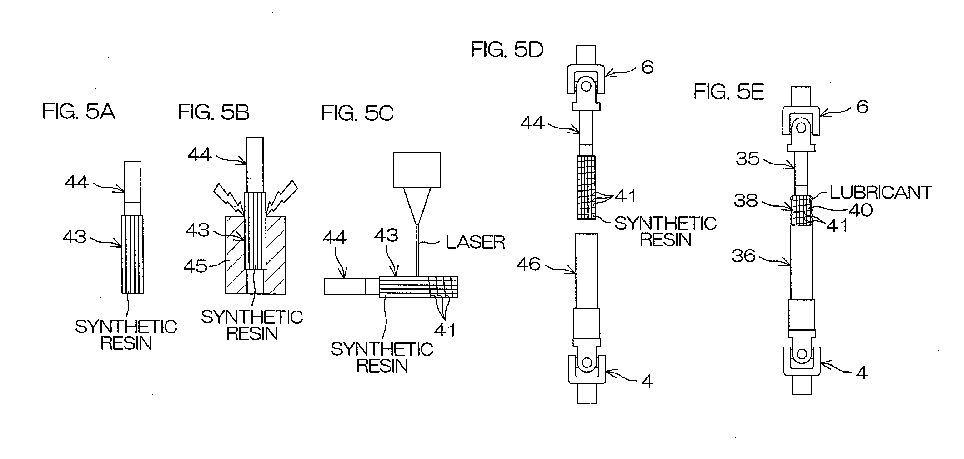

Figs. 5A to 5E are an illustrative diagrams for describing an example of a method for manufacturing the intermediate shaft 5. Figs. 5A to 5E are illustrative diagrams showing steps in the middle of the method for manufacturing the intermediate shaft 5. Hereinafter, an example of a method for manufacturing the intermediate shaft 5 will be described with reference to Figs. 5A-5E.
In this example of a method for manufacturing the intermediate shaft 5, as shown in Fig. 5A, by, for example, fluidized bed coating or spraying liquid synthetic resin on the intermediate member 44 for manufacturing the inner shaft 35 on which splines 43 are formed, the synthetic resin is coated. Then, as shown in Fig. 5B, the intermediate member 44 for manufacturing the inner shaft 35 is made to pass through a surface broach 45 for film processing, and unnecessary portions of the synthetic resin are removed. Thereafter, as shown in Fig. 5C, the synthetic resin coated on the intermediate member 44 for manufacturing is irradiated with a laser, and a portion of the synthetic resin is removed by thermal decomposition. Accordingly, the spiral lubricant retaining groove 41 is formed.

After the lubricant retaining groove 41 is formed, as shown in Fig. 5D, the universal joint 6 is fixed to the intermediate member 44 for manufacturing the inner shaft 35 by, for example, welding. Furthermore, as shown in Fig. 5D, the universal joint 4 is fixed to the intermediate member 46 for manufacturing the outer shaft 36 by, for example, welding. Thereafter, as shown in Fig. 5E, a lubricant is applied onto the outer splines 38 of the inner shaft 35, and the inner shaft 35 is fitted to the inner periphery of the outer shaft 36. Accordingly, the inner shaft 35 is fitted to the outer shaft 36, and the intermediate shaft 5 is manufactured.

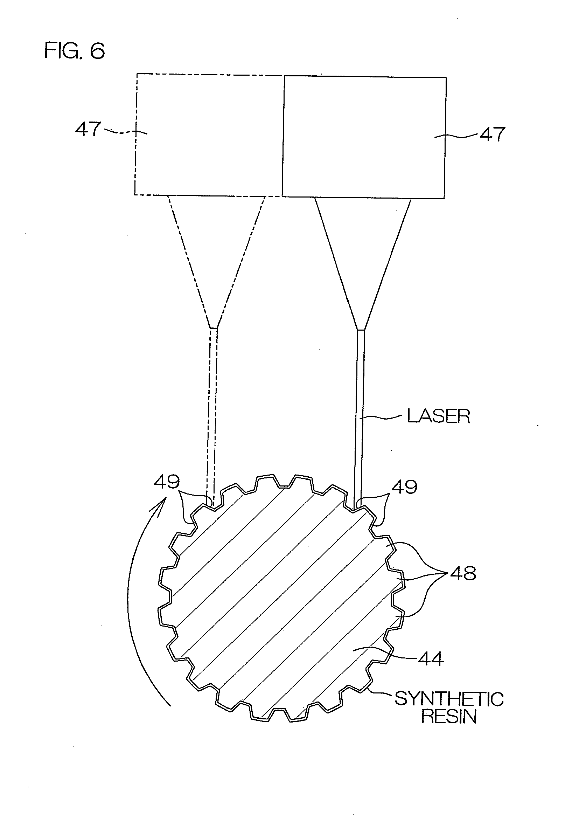

Fig. 6 is an illustrative diagram for describing an example of a processing method for forming the spiral lubricant retaining groove 41 by using a laser. Hereinafter, an example of a method for processing the lubricant retaining groove 41 when forming the spiral lubricant retaining groove 41 by using a laser will be described with reference to Fig. 6.
When forming the spiral lubricant retaining groove 41 by using a laser, for example, any of a YAG laser, CO₂ laser, and semiconductor, laser is generated from a laser irradiation unit 47, and the laser is irradiated onto the synthetic resin coated on the intermediate member 44 for manufacturing the inner shaft 35. Furthermore, when the laser is irradiated onto the synthetic resin coated on the intermediate member 44 for manufacturing, for example, while the intermediate member 44 for manufacturing the inner shaft 35 is rotated around the central axis, the laser irradiation unit 47 is moved in the axial direction (perpendicular to the paper sheet in Fig. 6) of the intermediate member 44 for manufacturing.

In detail, for example, the intermediate member 44 for manufacturing the inner shaft 35 on which synthetic resin is coated is disposed horizontally below the laser irradiation unit 47. Then, by moving the laser irradiation unit 47 horizontally (refer to the position of the laser irradiation unit 47 shown by the solid lines in Fig. 6), the position of the laser irradiation unit 47 is adjusted so that laser is irradiated perpendicularly or substantially perpendicularly to one spline tooth flank 49 of each spline tooth 48. In this state, while a laser is generated from the laser irradiation unit 47, the intermediate member 44 for manufacturing the inner shaft 35 is rotated at a constant speed by a rotation mechanism (not shown). Furthermore, by moving the laser irradiation unit 47 at a constant speed in the axial direction of the intermediate member 44 for manufacturing, the laser irradiation unit 47 and the intermediate member 44 for manufacturing are moved relative to each other in the axial direction of the intermediate member 44 for manufacturing. Accordingly, a laser is irradiated along a spiral trace onto the synthetic resin coated on the intermediate member 44 for manufacturing.

Next, laser generation from the laser irradiation unit 47 is interrupted. Then, by moving the laser irradiation unit 47 horizontally (refer to the position of the laser irradiation unit 47 shown by the alternate long and two-short dashed line in Fig. 6), the position of the laser irradiation unit 47 is adjusted so that a laser is irradiated perpendicularly or substantially perpendicularly to the other spline tooth flank 49 of each spline tooth 48. Thereafter, a laser is generated from the laser irradiation unit 47. Then, while rotating the intermediate member 44 for manufacturing the inner shaft 35 at a constant speed, the laser irradiation unit 47 and the intermediate member 44 for manufacturing are moved relative to each other at a constant speed in the axial direction of the intermediate member 44 for manufacturing. At this time, the rotation speed of the intermediate member 44 for manufacturing and the relative movement speed of the laser irradiation unit 47 and the intermediate member 44 for manufacturing are adjusted so that the laser is irradiated along the above-described spiral trace onto the synthetic resin coated on the intermediate member 44 for manufacturing.

The laser is thus irradiated once or a plurality of times along the spiral trace onto the synthetic resin coated on the intermediate member 44 for manufacturing the inner shaft 35. Accordingly, a portion of the synthetic resin is removed by thermal decomposition, and a lubricant retaining groove 41 spirally surrounding the intermediate member 44 for manufacturing the inner shaft 35 at a fixed pitch is formed. The laser is irradiated perpendicularly or substantially perpendicularly to each spline tooth flank 49, so that as compared with the case where the laser is irradiated obliquely to the spline tooth flanks 49, the lubricant retaining groove 41 can be formed while the output of the laser is suppressed. Furthermore, when the lubricant retaining groove 41 is continuously spiral as described above, for example, as compared with the case where an intermittent lubricant retaining groove is formed, processing conditions such as control of laser generation from the laser irradiation unit 47 are easilymanaged.

In the present preferred embodiment as described above, the lubricant retaining groove 41 is formed in at least the regions T1 of the resin coating 40 in which the spline tooth flanks 42 of the outer splines 38 are formed, so that when the inner shaft 35 and the outer shaft 36 move relative to each other in the axial direction X1, the lubricant retained in the lubricant retaining groove 41 can be reliably supplied to the sliding portions such as the spline tooth flanks 42 between the inner shaft 35 and the outer shaft 36. Accordingly, the sliding resistance between the inner shaft 35 and the outer shaft 36 can be reduced, and the inner shaft 35 and the outer shaft 36 can be smoothly moved relative to each other in the axial direction X1. In addition, the lubricant can be reliably supplied to the sliding portions between the inner shaft 35 and the outer shaft 36, so that abrasion of the resin coating 40canbesuppressed. Furthermore, sticking and slipping between the outer splines 38 and the inner splines 39 can be prevented from occurring, and accordingly, noise by sticking and slipping can be prevented from being caused. Furthermore, noise (that is, rattle) can be prevented from being caused by a collision between the tooth flanks in the steering mechanism A1 and the reduction gear mechanism 25.

In the present preferred embodiment, the lubricant retaining groove 41 extends in the direction D1 crossing the axial direction X1, so that the lubricant can be more reliably supplied to the sliding portions between the inner shaft 35 and the outer shaft 36. Furthermore, the lubricant retaining groove 41 is formed by using a laser, so that even on a convex-concave portion such as the resin coating 40, the lubricant retaining groove 41 having an arbitrary shape with high dimensional accuracy can be easily formed. Furthermore, the lubricant retaining groove 41 is formed by using a laser, so that, for example, existing manufacturing equipment for the process up to formation of the lubricant retaining groove 41 can be used without change. Therefore, the lubricant retaining groove 41 can be formed while an increase in cost is suppressed.

In the present preferred embodiment, a spline telescopic shaft is used as the intermediate shaft 5, so that vibration to be transmitted from the steering mechanism A1 side to the steering member 2 can be reliably absorbed by the intermediate shaft 5 and the vibration can be prevented from being transmitted to the steering member 2. Furthermore, in a column-assist type electric power steering system in which a steering assist force is given to the steering shaft 3, in addition to a steering torque, a torque from the electric motor 24 is transmitted to the intermediate shaft5, so that the outer splines 38 and the inner splines 39 move relative to each other in the axial direction X1 of the intermediate shaft 5 in state where a high torque is applied to the intermediate shaft 5. Therefore, the lubricant is pushed out from the portions between the outer splines 38 and the inner splines 39 (specifically, portions between spline tooth flanks opposed to each other), and easily causes sticking and slipping between the outer splines 38 and the inner splines 39. However, as in the present preferred embodiment, by using a spline telescopic shaft as the intermediate shaft 5, sticking and slipping can be reliably prevented from occurring between the outer splines 38 and the inner splines 39, and noise and vibration by sticking and slipping can be reliably prevented from being caused.

The preferred embodiment of the present invention is described above, however, the present invention is not limited to the contents of the preferred embodiment described above, but may be variously changed within the scope of the claims. For example, in the above-described preferred embodiment, the case where the lubricant retaining groove 41 is formed by using a laser is described, however, without limiting to a laser, the lubricant retaining groove 41 may be formed by using a water jet or compressed air. When the lubricant retaining groove 41 is formed by using compressed air, the lubricant retaining groove 41 may be formed by mixing hard particles in the compressed air and making the particles collide with the resin coating 40.

In the above-described preferred embodiment, a case where the spiral lubricant retaining groove 41 is formed on the resin coating 40 is described, however, the form of the lubricant retaining groove 41 is not limited to this. For example, although this is not shown, a plurality of annular lubricant retaining grooves surrounding the peripheries of the outer splines 38 may be provided in such a manner that their positions are made different from each other in the axial direction X1 of the intermediate shaft 5. In this case, the annular lubricant retaining grooves may extend in a direction obliquely crossing the axial direction X1 of the intermediate shaft 5, or may extend in a direction orthogonal to the axial direction X1 of the intermediate shaft 5. In the above-described preferred embodiment, a case where the continuous lubricant retaining groove 41 is formed on the resin coating 40 is described, however, the lubricant retaining groove 41 may be intermittent by being divided halfway in the extending direction of the lubricant retaining groove 41.

In the above-described embodiment, a case where the resin coating 40 is provided on the outer splines 38, and the lubricant retaining groove 41 is formed on the resin coating 40, is described, however, it is also possible that the resin coating is provided on both of the outer splines 38 and the inner splines 39, and the lubricant retaining groove is formed on at least one of the two resin coatings. It is also possible that the resin coating is provided only on the inner splines 39, and the lubricant retaining groove is formed on the resin coating provided on the inner splines 39.

In the above-described embodiment, a case where the vehicle steering apparatus 1 is a so-called column-assist type electric power steering system in which a steering assist force is given to the steering shaft 3 is described, however, the type of the vehicle steering apparatus 1 is not limited to this. Specifically, the vehicle steering apparatus 1 maybe a so-called pinion-assist type electric power steering system in which a steering assist force is given to the pinion shaft 7, or may be a so-called rack-assist type electric power steering system in which a steering assist force is given to the rack shaft 8.

In the above-described preferred embodiment, a case where a spline telescopic shaft according to a preferred embodiment of the present invention is used in the vehicle steering apparatus 1 is described, however, without limiting to the vehicle steering apparatus 1, the spline telescopic shaft according to the present invention may also be used in other systems.
The present invention has been described in detail above by means of detailed preferred embodiments, and persons skilled in the art who understand the above-described contents easily conceive modifications, alterations, and equivalents thereof. Therefore, the present invention should be construed to include everything within the scope of the claims and a scope equivalent thereto.

The present application corresponds to Japanese Patent Application No. 2010-037549 filed in Japan Patent Office on February 23, 2010, the whole disclosure of which is incorporated herein by reference.

### Description of Symbols

1: Vehicle steering apparatus, 2: Steering member, 3: Steering shaft, 5: intermediate shaft (spline telescopic shaft), 35: Inner shaft, 36: Outer shaft, 38: Outer spline, 39: Inner spline, 40: Resin coating, 41: Lubricant retaining groove, 42: Spline tooth flank, 43: Spline (of intermediate member for manufacturing inner shaft), 44: Intermediate member for manufacturing (inner shaft), 46: Intermediate member for manufacturing (outer shaft), A1: Steering mechanism, D1: Crossing direction, T1: Region (of resin coating), X1: Axial direction

## Claims

1. A spline telescopic shaft comprising:
an inner shaft and a tubular outer shaft fitted slidably in an axial direction;
outer splines provided on an outer periphery of the inner shaft;
inner splines provided on an inner periphery of the outer shaft;
a resin coating provided on at least one of the outer splines and the inner splines; and
a lubricant retaining groove formed on the resin coating by using any of a laser, water jet, and compressed air, the lubricant retaining groove extending in a direction crossing the axial direction.

2. The spline telescopic shaft according to Claim 1, wherein the lubricant retaining groove is formed in at least regions of the resin coating in which at least spline tooth flanks are formed.

3. A vehicle steering apparatus comprising:
a steering shaft joined to a steering member; and
a steering mechanism joined to the steering shaft via an intermediate shaft, wherein
the spline telescopic shaft according to Claim 1 or 2 is used as the steering shaft and/or the intermediate shaft.

4. A method for manufacturing a spline telescopic shaft including an inner shaft and a tubular outer shaft spline-fitted to each other slidably relative to each other in an axial direction, comprising:
a step of forming a resin coating on splines of at least one of an intermediate member for manufacturing the inner shaft and an intermediate member for manufacturing the outer shaft; and
a step of forming a lubricant retaining groove extending in a direction crossing the axial direction on the resin coating by using any of a laser, water jet, and compressed air.
